# EUROPÄISCHE PATENTSCHRIFT

(11) **EP 3 576 246 B1**
(45) Veröffentlichungstag und Bekanntmachung des Hinweises auf die Patenterteilung: **04.01.2023**
(21) Anmeldenummer: 19171592.9
(22) Anmeldetag: 29.04.2019
(51) Int. Cl.: H02J 7/00, H02J 3/26, B60L 53/63

(54) **VERFAHREN ZUM BETREIBEN EINES LADESYSTEMS MIT MEHREREN LADEPUNKTEN**
METHOD FOR OPERATING A LOADING SYSTEM WITH MULTIPLE LOADING POINTS
PROCÉDÉ DE FONCTIONNEMENT D'UN SYSTÈME DE CHARGE À UNE PLURALITÉ DE POINTS DE CHARGE

(30) Priorität: 28.05.2018 DE 102018208396
(43) Veröffentlichungstag der Anmeldung: 04.12.2019
(73) Patentinhaber: Mahle International GmbH, 70376 Stuttgart (DE)
(72) Erfinder: BEEZ, Steve, 98666 Masserberg (DE); EWERT, Sebastian, 70180 Stuttgart (DE); HEINRICH, Nicole, 71691 Freiberg (DE); KREPULAT, Walter, 70563 Stuttgart (DE)
(74) Vertreter: BRP Renaud & Partner mbB Rechtsanwälte Patentanwälte Steuerberater

(56) Entgegenhaltungen:
- EP-A1- 2 919 352
- EP-A2- 2 735 468
- US-A1- 2013 049 677
- US-A1- 2014 001 850

## Beschreibung

Die Erfindung betrifft ein Verfahren zum Betreiben eines Ladesystems mit mehreren Ladepunkten zum Laden von elektrischen Verbrauchern, bspw. von Elektrofahrzeugen, wobei das Ladesystem an einem Stromnetz mit mehreren Phasen angeschlossen ist.

Elektrofahrzeuge laden heutzutage ein- oder mehrphasig mit Wechselstrom oder mit Gleichstrom. Die Ladung mit Wechselstrom ist dabei nach Norm im Betrieb von 6 bis 63 Ampere auf einer oder mehreren Phasen möglich. Viele Energieversorgungsunternehmen und Verteilernetzbetreiber fordern eine Vermeidung von Schieflast über 20 Ampere durch einzelne Verbraucher. Es sind jedoch Elektrofahrzeuge auf dem Markt, welche einphasig über 20 Ampere laden. Dadurch kann allerdings eine Schieflast entstehen, die über der von den Energieversorgungsunternehmen und Verteilnetzbetreibern vorgegebenen maximalen Schieflast liegt. Um eine Schieflast zu vermeiden, können den Verbrauchern Leistungsvorgaben übermittelt werden, die angeben, wie hoch der maximale verfügbare Ladestrom für den jeweiligen Verbraucher ist, um die Last möglichst gleichmäßig auf die Phasen zu verteilen. Allerdings kann das Problem auftreten, dass ein Verbraucher nicht den gesamten verfügbaren Ladestrom abruft, beispielsweise, wenn dies durch den Laderegler des Verbrauchers grundsätzlich begrenzt ist, durch Nutzervorgabe reduziert ist oder wenn der Akku voll ist. Dies kann die Regelung der Schieflast beeinflussen.

Problematisch ist dies insbesondere, wenn die Übermittlung der Leistungsvorgaben nur in eine Richtung funktioniert, so dass die Verbraucher keine Rückmeldung über den tatsächlichen Ladestrom geben können.

Die Dokumente EP 2 919 352 A1, US 2014/001850 A1 und EP 2 735 468 A2 offenbaren Ladesysteme gemäß dem Stand der Technik.

Der Erfindung liegt die Aufgabe zugrunde eine verbesserte oder zumindest andere Ausführungsform eines Verfahrens zum Betreiben eines Ladesystems mit mehreren Ladepunkten bereit zu stellen, die sich insbesondere durch die Vermeidung von zu hohen Schieflasten auszeichnet.

Diese Aufgabe wird erfindungsgemäß durch den Gegenstand des unabhängigen Anspruchs gelöst. Vorteilhafte Weiterbildungen sind Gegenstand der abhängigen Ansprüche.

Die Erfindung basiert auf der Grundidee, durch Änderung der Leistungsvorgabe an einzelnen Ladepunkten darauf zu schließen, wie hoch der Ladestrom des Verbrauchers an diesem Ladepunkt ist und wie hoch er sein könnte. Erfindungsgemäß ist daher vorgesehen, dass regelmäßig für jeden Ladepunkt einzeln die Leistungsvorgabe für ein vorgegebenes Testzeitintervall geändert wird und die resultierende Änderung der Phasenströme am Bilanzpunkt gemessen wird, und dass aus der resultierenden Änderung der Phasenströme ermittelt wird, ob an dem Ladepunkt noch ein solcher Verbraucher angeschlossen ist, ob der Verbraucher mit signifikantem Strom lädt und/oder oder der Verbraucher mit einem höherem Strom laden könnte. Dadurch kann eine Steuerung des Ladesystems erkennen, ob durch den Verbraucher an diesem Ladepunkt ein Regelpotential zur Vermeidung von Schieflast vorliegt oder nicht. Nur wenn ein signifikanter Ladestrom vorhanden ist und/oder wenn der Ladestrom erhöht werden kann, folgt der Ladestrom des Verbrauchers den Leistungsvorgaben. Daher ist es nur dann möglich durch die Änderung der Leistungsvorgabe die Schieflast zu beeinflussen. Daher ist diese Information wertvoll für die Regelung der Schieflast.

Das Testzeitintervall ist vorzugsweise ein kurzer Zeitraum, beispielsweise 5 bis 30 Sekunden.

Eine zweckmäßige Lösung sieht vor, dass an jedem Ladepunkt die Änderung der Leistungsvorgabe nach einem vorgegebenen Wiederholungszeitintervall wiederholt wird. Dadurch bleibt die Bewertung des Regelpotentials der einzelnen Verbraucher aktuell. Eine vorteilhafte Zeitspanne für die Wiederholung der Messung sind zum Beispiel 120 - 600 Sekunden.

Eine zweckmäßige Möglichkeit sieht vor, dass die Leistungsvorgabe für das vorgegebene Testzeitintervall verringert wird. Dadurch kann insbesondere erkannt werden, ob der Verbraucher mit einem signifikanten Ladestrom lädt oder nicht. Eine solche Änderung der Leistungsvorgabe kann beispielsweise eine Reduktion des Ladestroms vom 20A auf 10A sein. Reduziert sich dadurch der entsprechende Phasenstrom ebenfalls um 10A, heißt das, dass der Verbraucher mit 20A geladen hat und potentiell auch wieder laden wird, sobald die Leistungsvorgabe auf den alten Wert zurückgesetzt wird. Wenn allerdings keine oder nur eine kleine Änderung des Phasenstroms auftritt, heißt das, dass der Verbraucher nicht mit den vollen 20A geladen hat. Daher kann dieser Verbraucher nicht oder nur in geringerem Maße zur Regelung der Schieflast genutzt werden.

Eine weitere zweckmäßige Lösung sieht vor, dass die Leistungsvorgabe für das vorgegebene Testzeitintervall erhöht wird. Durch eine Erhöhung der Leistungsvorgabe kann entsprechend erkannt werden, ob der Verbraucher auch einen größeren Ladestrom nutzen würde. Somit kann das Regelpotential der einzelnen Verbraucher bestimmt werden.

Eine weitere zweckmäßige Möglichkeit sieht vor, dass eine Schieflast der Phasen unterhalb eines Schieflastgrenzwertes gehalten wird, indem jedem zum Laden angeschlossenen elektrischen Verbraucher eine Leistungsvorgabe übermittelt wird. Dadurch besteht eine Regelungsmöglichkeit für die Phasenströme, sodass die Schieflast unterhalb des Schieflastgrenzwertes gehalten werden kann. Gleichzeitig kann, wenn an allen Phasen ein elektrischer Verbraucher zum Laden angeschlossen ist, ein höherer individueller Ladestrom erreicht werden, als bei einem Verfahren, in welchem die maximalen Ladeströme auf einen Grenzwert gedrosselt werden, bei welchem die Schieflastgrenze nicht überschritten werden kann. Der Schieflastgrenzwert ist üblicherweise durch das Energieversorgungsunternehmen oder den Verteilernetzbetreiber vorgegeben. Der Schieflastgrenzwert liegt bspw. bei 20 Ampere.

In der Beschreibung und den beigefügten Ansprüchen wird unter der Schieflast die aktuell größte auftretende Differenz der Lasten zwischen jeweils zwei beliebigen Phasen des Stromnetzes an dem Bilanzpunkt verstanden.

Eine günstige Möglichkeit sieht vor, dass die Leistungsvorgaben für die elektrischen Verbraucher derart eingestellt werden, dass jede Lastdifferenz zwischen jedem möglichen Paar der Phasen des Stromnetzes am Bilanzpunkt kleiner als der Schieflastgrenzwert ist. Dadurch kann erreicht werden, dass die Schieflast unterhalb des Schieflastgrenzwertes bleibt.

In der Beschreibung und den beigefügten Ansprüchen wird unter einem Bilanzpunkt ein Punkt des Stromnetzes verstanden, an welchen die Schieflastgrenze eingehalten werden soll. Ein solcher Bilanzpunkt kann bspw. ein elektrischer Hausanschluss, der Ausgang eines Mittelspannungstransformators oder ein virtuelles Energieversorgungsnetz sein.

Eine weitere günstige Möglichkeit sieht vor, dass die Leistungsvorgabe umfasst, wie viel Ladeleistung aktuell zusätzlich entnommen werden darf, oder um wie viel die Ladeleistung reduziert werden muss. Dadurch können über die Leistungsvorgabe die Phasenströme geregelt werden, sodass angeschlossenen elektrischen Verbrauchern die größtmögliche elektrische Ladeleistung zur Verfügung gestellt werden kann, ohne dass die Schieflast den Schieflastgrenzwert überschreitet. Eine weitere besonders günstige Möglichkeit sieht vor, dass, wenn der Phasenstrom einer Phase unterhalb eines Lastgrenzwertes liegt und der Phasenstrom dieser Phase kleiner ist als der geringste gemessene Phasenstrom einer anderen Phase zuzüglich des Schieflastgrenzwertes, wird über die Leistungsvorgabe signalisiert, dass zusätzliche Ladeleistung entnommen werden darf. Dadurch kann erreicht werden, dass wenn Leistungsreserven vorhanden sind, diese Leistungsreserven durch den angeschlossenen elektrischen Verbraucher auch ausgenutzt werden können. Die Höhe der zusätzlichen Leistung ergibt sich durch den Abstand zu den jeweiligen Grenzwerten, wobei der kleinere der beiden Abstände zu den Grenzwerten relevant ist für die mögliche Leistungserhöhung.

Ferner sieht die besonders günstige Möglichkeit vor, dass, wenn der Phasenstrom einer Phase oberhalb eines Lastgrenzwertes liegt oder der Phasenstrom dieser Phase größer ist als der geringste gemessene Phasenstrom einer der anderen Phasen zuzüglich des Schieflastgrenzwertes, wird über die Leistungsvorgabe signalisiert, dass die Ladeleistung reduziert werden muss. Dadurch kann auf Laständerungen an dem Stromnetz reagiert werden, um eine Überlastung oder ein Überschreiten des Schieflastgrenzwertes zu verhindern. Die Höhe der zu reduzierenden Leistung ergibt sich durch die jeweilige Überschreitung des Lastgrenzwertes bzw. des Schieflastgrenzwertes, wobei bei Überschreitung beider Grenzwerte der höhere Wert relevant ist, sodass nach der durchgeführten Reduktion der Ladeleistung beide Grenzwerte eingehalten werden.

Eine vorteilhafte Lösung sieht vor, dass die Leistungsvorgabe eine aktuell maximale verfügbare Ladeleistung umfasst. Die Leistungsvorgabe kann dem angeschlossenen elektrischen Verbraucher damit signalisieren, wie viel maximal verfügbare Ladeleistung bereit steht, bspw. wenn der elektrische Verbraucher gerade angeschlossen wurde. Dadurch kann die Regelzeit, bis die optimale Ladeleistung eingestellt ist, verkürzt werden.

Eine weitere vorteilhafte Lösung sieht vor, dass die aktuell maximale verfügbare Ladeleistung der Phase unter Berücksichtigung zumindest der aktuellen Phasenströme, einer maximalen zulässigen Leistung der jeweiligen Phase und einer maximal zulässigen Schieflast zwischen den Phasen ermittelt wird. Dadurch kann bei der Bestimmung der maximal verfügbaren Ladeleistung sichergestellt werden, dass die Phase des Stromnetzes nicht überlastet wird und dass die Schieflast den Schieflastgrenzwert nicht überschreitet.

Eine zweckmäßige Variante sieht vor, dass, wenn ein elektrischer Verbraucher zum Laden angeschlossen wird, ermittelt wird, an welcher Phase der elektrische Verbraucher angeschlossen ist, und eine aktuell maximal verfügbare Ladeleistung der Phase, an der der elektrische Verbraucher angeschlossen ist, ermittelt wird, und dem elektrischen Verbraucher die aktuell maximale verfügbare Ladeleistung übermittelt wird. Wenn also der elektrische Verbraucher angeschlossen wird, erhält dieser die Information, wie viel Leistung er zum Laden über die Phase entnehmen darf. Dadurch wird in besonders kurzer Zeit die optimale Ausnutzung des Stromnetzes erreicht.

Eine weitere zweckmäßige Variante sieht vor, dass die Leistungsvorgaben derart gewählt werden, dass zusätzlich eine individuelle Last der einzelnen Phasen jeweils unterhalb eines Lastgrenzwertes gehalten wird. Dadurch wird die Überlastung der einzelnen Phasen des Stromnetzes verhindert, sodass ein sicherer und stabiler Betrieb ermöglicht wird. Vorteilhaft ist der Lastgrenzwert durch eine maximal zulässige Last am Bilanzpunkt gegeben.

Eine vorteilhafte Möglichkeit sieht vor, dass die Phasenströme am Bilanzpunkt fortlaufend ermittelt werden, und daraus fortlaufend die Leistungsvorgabe für die zum Laden angeschlossenen elektrischen Verbraucher angepasst und dem jeweiligen elektrischen Verbraucher übermittelt werden. Dadurch kann auf Änderungen der Lastbedingungen an den einzelnen Phasen reagiert werden. Insbesondere kann, wenn bspw. an der ersten Phase die Ladung des elektrischen Verbrauchers beendet wird und keine Leistung mehr entnommen wird, es zu einer Schieflast führen, wenn an den anderen Phasen elektrische Verbraucher hängen. Durch die fortlaufende Überwachung kann dies erkannt werden und somit die übrigen elektrischen Verbraucher in ihrer Ladeleistung gedrosselt werden, sodass der Schieflastgrenzwert nicht überschritten wird.

Eine weitere vorteilhafte Möglichkeit sieht vor, dass das Stromnetz ein dreiphasiges Drehstromnetz ist. Solche dreiphasigen Drehstromnetze werden üblicherweise von den Energieversorgungsunternehmen bereitgestellt.

Eine günstige Variante sieht vor, dass die elektrischen Verbraucher anhand der übermittelten Leistungsvorgaben die abgerufene Ladeleistung einstellen. Dadurch wird erreicht, dass tatsächlich eine Regelung der Ladeleistung erfolgt, sodass die Leistungsgrenzwerte und die Schieflastgrenzwerte eingehalten werden können. Es versteht sich, dass die elektrischen Verbraucher nicht zwingend die maximal zur Verfügung stehende Ladeleistung abrufen müssen.

Eine weitere günstige Variante sieht vor, dass die Leistungsvorgaben durch ein PWM-Signal übermittelt werden. Solche PWM-Signale sind leicht zu erzeugen und leicht zu interpretieren, so dass dadurch eine sehr einfache Übermittlung der Leistungsvorgaben möglich ist.

Eine besonders vorteilhafte Lösung sieht vor, dass die zum Laden angeschlossenen elektrischen Verbraucher Elektrofahrzeuge sind. Gerade bei Elektrofahrzeugen treten sehr hohe Ladeleistungen auf, um die Ladezeit der Elektrofahrzeuge zu verkürzen, sodass die Problematik der Schieflast und der Überlastung einzelner Phasen besonders relevant ist.

In der Beschreibung und den beigefügten Ansprüchen werden unter Elektrofahrzeuge Kraftfahrzeuge verstanden, die zumindest teilweise durch einen Elektroantrieb angetrieben sind und einen elektrischen Energiespeicher aufweisen.

Weitere wichtige Merkmale und Vorteile der Erfindung ergeben sich aus den Unteransprüchen, aus der Zeichnung und aus der zugehörigen Figurenbeschreibung anhand der Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in der Zeichnung dargestellt und werden in der nachfolgenden Beschreibung näher erläutert.

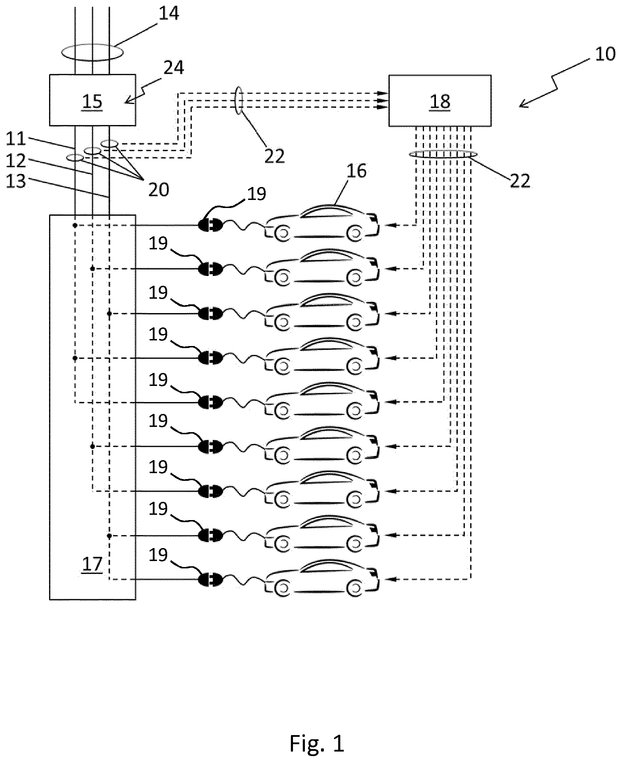

Die einzige Figur 1 zeigt ein Blockschaltbild eines Ladesystems, an welchem das erfindungsgemäße Verfahren durchgeführt werden kann.

Ein in Figur 1 dargestelltes System 10 umfasst einen Stromnetzanschluss 15 mit mehreren Phasen 14, beispielsweise einer ersten Phase 11, einer zweiten Phase 12 und einer dritten Phase 13, an welche elektrische Verbraucher, bspw. Elektrofahrzeuge 16, im folgenden Elektrofahrzeug 16 genannt, zum Laden der Elektrofahrzeuge 16 angeschlossen werden können. Die Elektrofahrzeuge 16 sind dabei jeweils über einen Ladepunkt 19 eine Unterverteilung 17 angeschlossen. Ferner ist eine Steuerungseinrichtung 18 vorgesehen, welche das System 10 überwacht. Dazu ist je Phase 11,12,13, 14 eine Phasenstrommesseinrichtung 20 vorgesehen, welche die Werte der gemessenen Phasenströme an die Steuereinrichtung 18 übermittelt. Für die Übermittlung der Werte der gemessenen Phasenströme sind vorzugsweise Datenverbindungen 22 vorgesehen. Ferner sind Datenverbindungen 22 zwischen der Steuereinrichtung 18 und den Elektrofahrzeugen 16 vorgesehen, über welche eine Leistungsvorgabe von der Steuereinrichtung 18 aus an die Elektrofahrzeuge 16 übermittelt werden kann.

Alternativ zur Phasenstrommesseinrichtung 20 können auch Daten eines vernetzten Stromzählers ausgewertet werden, um auf die Phasenströme zu schließen.

Die Steuereinrichtung 18 steuert die Elektrofahrzeuge 16 derart an, dass die von den Elektrofahrzeugen 16 über die einzelnen Phasen 11, 12, 13, 14 entnommenen Ströme derart sind, dass die einzelnen Phasen 11, 12, 13, 14 innerhalb vorgegebener Betriebsparameter belastet werden.

Diese Betriebsparameter umfassen insbesondere eine maximale Leistung bzw. einen maximalen Phasenstrom der Phasen 11, 12, 13, 14. Des Weiteren können die Betriebsparameter auch eine maximale Schieflast zwischen den Phasen 11, 12, 13, 14 umfassen. Die Schieflast definiert sich durch den größten Unterschied der Leistungen, die über die Phasen 11, 12, 13, 14 abgerufen werden. Insbesondere ist die Schieflast die Lastdifferenz zwischen der Last der Phase 11, 12, 13, 14, über welche die größte Leistung abgegeben wird zu der Last der Phase 11, 12, 13, 14 über die die geringste Leistung abgegeben wird. Die Last bzw. die Schieflast kann dabei beispielsweise über die elektrische Leistung oder den elektrischen Strom definiert werden.

Wird nun ein Kraftfahrzeug 16 zum Laden an eine der Phasen 11, 12, 13, 14 angeschlossen, ermittelt die Steuerungseinrichtung, wie hoch die maximal verfügbare Ladeleistung für das Kraftfahrzeug 16 ist und übermittelt diese aktuell maximale verfügbare Ladeleistung an dieses Kraftfahrzeug 16. Das Kraftfahrzeug 16 wird dann maximal diese Ladeleistung über die Phase 11, 12, 13, 14 beziehen. Im weiteren Ladevorgang wird die Steuereinrichtung 18 fortlaufend die Phasenströme der einzelnen Phasen 11, 12, 13, 14 überwachen und ggf. Leistungsvorgaben an die Kraftfahrzeuge 16 übermitteln, welche den Kraftfahrzeugen 16 signalisieren, dass entweder mehr Ladeleistung abgerufen werden darf, oder dass die Ladeleistung reduziert werden muss.

Wenn bspw. nur ein einzelnes Elektrofahrzeug 16 an einer der Phasen 11, 12, 13, 14 angeschlossen ist, ist die maximal verfügbare Ladeleistung durch die maximale Schieflast gegeben. Die maximale erlaubte Schieflast beträgt üblicherweise 20 Ampere. Daraus ergibt sich, dass das Elektrofahrzeug 16 lediglich mit 20 Ampere laden kann.

Falls ein zweites Elektrofahrzeug 16 an eine weitere Phase 11, 12, 13, 14 angeschlossen wird, kann dieses ebenfalls mit 20 Ampere geladen werden. Wenn schließlich auch an einer dritten Phase 11, 12, 13, 14 ein Elektrofahrzeug 16 angeschlossen wird, ergibt sich somit ein Lastausgleich, wodurch die maximale Ladeleistung nicht mehr durch die Schieflast begrenzt wird, sondern durch die individuelle maximale Last an den einzelnen Phasen 11, 12, 13, 14.

Da die Ladeleistung der Elektrofahrzeuge 16 nicht notwendiger Weise immer die maximal verfügbare Ladeleistung ist, erfolgt auch bei drei angeschlossenen Elektrofahrzeugen 16 eine fortlaufende Überwachung der Phasenströme, um ggf. Ladeströme einzelner Elektrofahrzeuge 16 drosseln zu können, um eine Überschreitung der maximal zulässigen Schieflast zu verhindern.

Es versteht sich, dass auch mehr als ein Elektrofahrzeug 16 zum Laden an einer einzelnen Phase 11, 12,13, 14 angeschlossen sein kann. Somit können mehr Elektrofahrzeuge 16 gleichzeitig geladen werden, als Phasen 11, 12, 13, 14 am Stromnetz zur Verfügung stehen.

Um zu ermitteln, wie hoch der von den jeweiligen angeschlossenen Elektrofahrzeuge 16 bezogene Ladestrom oder Ladeleistung ist, wird regelmäßig die Leistungsvorgabe an einem Ladepunkt 19 geändert. Dabei werden die Phasenströme am Bilanzpunkt 24 beobachtet. Wenn die Änderung des Phasenstroms der Änderung der Leistungsvorgabe entspricht, hat das Elektrofahrzeug 16 mit dem vollen Ladestrom nach der Leistungsvorgabe geladen.

Wenn allerdings die Änderung des Phasenstroms nicht der Änderung der Leistungsvorgabe entspricht, hat das Elektrofahrzeug 16 mit einem kleineren Ladestrom geladen. Das bedeutet, dass die Steuereinrichtung 18 berücksichtigen muss, dass das an diesem Ladepunkt 19 angeschlossene Elektrofahrzeug 16 nicht den maximalen Ladestrom abrufen wird. Entsprechend müssen die Leistungsvorgaben für die anderen Ladepunkte 19 geändert werden, um die Schieflast innerhalb der zulässigen Grenzen zu halten.

Durch eine Reduktion der Leistungsvorgabe kann also erkannt werden, wie hoch der Ladestrom des Elektrofahrzeugs 16 ist, bzw. ob das Elektrofahrzeug 16 seinen Ladevorgang beendet hat. Durch eine Erhöhung der Leistungsvorgabe kann erkannt werden, ob das jeweilige angeschlossene Elektrofahrzeug 16 einen größeren Ladestrom beziehen würde und somit eine weitere Regelung der Schieflast ermöglicht. Somit kann das Regelungspotential für die Schieflast der einzelnen Elektrofahrzeuge 16 ermittelt werden.

Die Änderung der Leistungsvorgabe wird für jeden Ladepunkt 19 nach einem Wiederholungszeitintervall wiederholt. Dadurch bleibt die Beurteilung der Regelungspotentiale aktuell.

## Patentansprüche

1. Verfahren zum Betreiben eines Ladesystems (10) mit mehreren Ladepunkten (19) zum Laden von elektrischen Verbrauchern (16), beispielsweise von Elektrofahrzeugen,
- wobei das Ladesystem (10) an einem Stromnetz mit mehreren Phasen (11, 12, 13, 14) angeschlossen ist,
- wobei an einem Bilanzpunkt (24) Phasenströme der Phasen (11, 12, 13, 14) des Stromnetzes gemessen werden,
- wobei Leistungsvorgaben an elektrische Verbraucher (16), die an einem der Ladepunkte (19) angeschlossen sind, übermittelt werden,
- wobei regelmäßig für jeden Ladepunkt (19) einzeln die Leistungsvorgabe für ein vorgegebenes Testzeitintervall geändert wird und die resultierende Änderung der Phasenströme am Bilanzpunkt (24) gemessen wird, und
dass aus der resultierenden Änderung der Phasenströme ermittelt wird, ob an dem Ladepunkt (19) noch ein solcher Verbraucher (16) angeschlossen ist, ob der Verbraucher (16) mit signifikantem Strom lädt und/oder ob der Verbraucher (16) mit einem höheren Strom laden könnte,
- wobei an jedem Ladepunkt (19) die Änderung der Leistungsvorgabe nach einem vorgegebenen Wiederholungszeitintervall wiederholt wird,
**dadurch gekennzeichnet,**
- **dass** jeder Ladepunkt (19) exakt mit einer Phase (11, 12, 13) der Phasen (11, 12, 13) verbunden wird.

2. Verfahren nach Anspruch 1,
**dadurch gekennzeichnet,**
**dass** die Leistungsvorgabe für das Testzeitintervall erhöht oder verringert wird.

3. Verfahren nach einem der Ansprüche 1 bis 2,
**dadurch gekennzeichnet,**
- **dass** eine Schieflast der Phasen (11, 12, 13, 14) unterhalb eines Schieflastgrenzwertes gehalten wird, indem jedem zum Laden angeschlossenen elektrischen Verbraucher (16) eine angepasste Leistungsvorgabe übermittelt wird.

4. Verfahren nach einem der Ansprüche 1 bis 3,
**dadurch gekennzeichnet,**
**dass** die Leistungsvorgabe umfasst, wie viel Ladeleistung aktuell zusätzlich entnommen werden darf oder um wie viel die Ladeleistung reduziert werden muss.

5. Verfahren nach Anspruch 4,
**dadurch gekennzeichnet,**
- **dass**, wenn der Phasenstrom einer Phase (11, 12, 13, 14) unterhalb eines Lastgrenzwertes liegt und der Phasenstrom dieser Phase (11, 12, 13, 14) kleiner ist als der geringste gemessene Phasenstrom einer der anderen Phasen (11, 12, 13, 14) zuzüglich des Schieflastgrenzwertes, wird über die Leistungsvorgabe signalisiert, dass zusätzliche Ladeleistung entnommen werden darf,
- **dass**, wenn der Phasenstrom einer Phase (11, 12, 13, 14) oberhalb eines Lastgrenzwertes liegt oder der Phasenstrom dieser Phase (11, 12, 13, 14) größer ist als der geringste gemessene Phasenstrom einer der anderen Phasen (11, 12, 13, 14) zuzüglich des Schieflastgrenzwertes, wird über die Leistungsvorgabe signalisiert, dass die Ladeleistung reduziert werden muss.

6. Verfahren nach einem der Ansprüche 1 bis 5,
**dadurch gekennzeichnet,**
**dass** die Leistungsvorgabe eine aktuell maximale verfügbare Ladeleistung umfasst.

7. Verfahren nach Anspruch 6,
**dadurch gekennzeichnet,**
**dass** die aktuell maximale verfügbare Ladeleistung der Phase (11, 12, 13, 14) unter Berücksichtigung zumindest der aktuellen Phasenströme, einer maximalen zulässigen Leistung der jeweiligen Phase (11, 12, 13, 14) und einer maximal zulässigen Schieflast zwischen den Phasen (11, 12, 13, 14) ermittelt wird.

8. Verfahren nach Anspruch 6 oder 7,
**dadurch gekennzeichnet,**
**dass** wenn ein elektrischer Verbraucher (16) zum Laden angeschlossen wird, ermittelt wird, an welcher Phase (11, 12, 13, 14) der elektrische Verbraucher (16) angeschlossen ist, und eine aktuell maximale verfügbare Ladeleistung der Phase (11, 12, 13, 14), an der der elektrischer Verbraucher angeschlossen ist, ermittelt wird, und dem elektrischen Verbraucher (16) die aktuell maximale verfügbare Ladeleistung übermittelt wird.

9. Verfahren nach einem der Ansprüche 1 bis 8,
**dadurch gekennzeichnet,**
**dass** die Leistungsvorgaben derart gewählt werden, dass zusätzlich eine individuelle Last der einzelnen Phasen (11, 12, 13, 14) jeweils unterhalb eines Lastgrenzwertes gehalten wird.

10. Verfahren nach einem der Ansprüche 1 bis 9,
**dadurch gekennzeichnet,**
**dass** die Phasenströme am Bilanzpunkt (24) fortlaufend ermittelt werden, und daraus fortlaufend die Leistungsvorgaben für die zum Laden angeschlossenen elektrischen Verbraucher (16) angepasst und dem jeweiligen elektrischen Verbraucher (16) übermittelt werden.

11. Verfahren nach einem der Ansprüche 1 bis 10,
**dadurch gekennzeichnet,**
**dass** die elektrischen Verbraucher (16) anhand der übermittelten Leistungsvorgaben die abgerufene Ladeleistung einstellen.

12. Verfahren nach einem der Ansprüche 1 bis 11,
**dadurch gekennzeichnet,**
**dass** die Leistungsvorgaben durch ein PWM-Signal übermittelt werden.

13. Verfahren nach einem der Ansprüche 1 bis 12,
**dadurch gekennzeichnet,**
**dass** die zum Laden angeschlossene, elektrische Verbraucher (16) Elektrofahrzeuge sind.

## Claims

1. Method for operating a charging system (10) with multiple charging points (19) for charging electrical consumers (16), for example electric vehicles,
- wherein the charging system (10) is connected to a power grid having multiple phases (11, 12, 13, 14),
- wherein phase currents of the phases (11, 12, 13, 14) of the power grid are measured at a balance point (24),
- wherein power specifications are transmitted to electrical consumers (16) connected to one of the charging points (19),
- wherein, for each charging point (19) individually, the power specification is changed regularly for a predefined test time interval and the resulting change of the phase currents is measured at the balance point (24), and
that it is determined from the resulting change in the phase currents whether such a consumer (16) is still connected to the charging point (19), whether the consumer (16) is charging with a significant current and/or whether the consumer (16) could charge with a higher current,
- wherein at each charging point (19) the change in power specification is repeated after a predefined repetition time interval,
**characterised in that**
- each charging point (19) is connected to exactly one phase (11, 12, 13) of the phases (11, 12, 13).

2. Method according to claim 1,
**characterised in that**
the power specification for the test time interval is increased or reduced.

3. Method according to any of claims 1 to 2,
**characterised in that**
- an unbalanced load of the phases (11, 12, 13, 14) is kept below an unbalanced load limit value by transmitting an adapted power specification to each electrical consumer (16) connected for charging.

4. Method according to any of claims 1 to 3,
**characterised in that**
the power specification includes how much additional charging power may presently be withdrawn or by how much the charging power has to be reduced.

5. Method according to claim 4,
**characterised in that**
- when the phase current of one phase (11, 12, 13, 14) is below a load limit value and the phase current of this phase (11, 12, 13, 14) is lower than the smallest measured phase current of one of the other phases (11, 12, 13, 14) plus the unbalanced load limit value, it is signaled via the power specification that additional charging power can be withdrawn,
- when the phase current of one phase (11, 12, 13, 14) is above a load limit value or the phase current of this phase (11, 12, 13, 14) is greater than the smallest measured phase current of one of the other phases (11, 12, 13, 14) plus the unbalanced load limit value, it is signaled via the power specification that the charging power has to be reduced.

6. Method according to any of claims 1 to 5,
**characterised in that**
the power specification includes a present maximum available charging power.

7. Method according to claim 6,
**characterised in that**
the present maximum available charging power of the phase (11, 12, 13, 14) is determined taking into account at least the present phase currents, a maximum permissible power of the respective phase (11, 12, 13, 14) and a maximum permissible unbalanced load between the phases (11, 12, 13, 14).

8. Method according to claim 6 or 7,
**characterised in that**
when an electrical consumer (16) is connected for charging, it is determined to which phase (11, 12, 13, 14) the electrical consumer (16) is connected, and a present maximum available charging power of the phase (11, 12, 13, 14) to which the electrical consumer is connected is determined, and the present maximum available charging power is transmitted to the electrical consumer (16).

9. Method according to any of claims 1 to 8,
**characterised in that**
the power specifications are selected in such a way that, in addition, an individual load of the individual phases (11, 12, 13, 14) is in each case kept below a load limit value.

10. Method according to any of claims 1 to 9,
**characterised in that**
the phase currents at the balance point (24) are continuously determined, and based thereon the power specifications for the electrical consumers (16) connected for charging are continuously adapted and transmitted to the respective electrical consumer (16).

11. Method according to any of claims 1 to 10,
**characterised in that**
the electrical consumers (16) set the retrieved charging power on the basis of the transmitted power specifications.

12. Method according to any of claims 1 to 11,
**characterised in that**
the power specifications are transmitted by a PWM signal.

13. Method according to any of claims 1 to 12,
**characterised in that**
the electrical consumers (16) connected for charging are electric vehicles.

## Revendications

1. Procédé de fonctionnement d'un système de charge (10) avec plusieurs points de charge (19) pour le chargement de consommateurs électriques (16), par exemple de véhicules électriques,
- dans lequel le système de charge (10) est raccordé à un réseau électrique doté de plusieurs phases (11, 12, 13, 14),
- dans lequel des courants de phase des phases (11, 12, 13, 14) du réseau électrique sont mesurés au niveau d'un point d'équilibre (24),
- dans lequel des spécifications de puissance sont transmises à des consommateurs électriques (16) qui sont raccordés à un des points de charge (19),
- dans lequel la spécification de puissance pour un intervalle de temps de test défini est modifiée individuellement régulièrement pour chaque point de charge (19) et la modification en résultant des courants de phase est mesurée au niveau du point d'équilibre (24), et
la modification en résultant des courants de phase permet de déterminer si un tel consommateur (16) est encore raccordé au point de charge (19), si le consommateur (16) se charge de manière significative et/ou si le consommateur (16) peut charger un courant supérieur,
- dans lequel la modification de la spécification de puissance est répétée au niveau de chaque point de charge (19) en fonction d'un intervalle de temps de répétition défini,
**caractérisé en ce que**,
- chaque point de charge (19) est connecté précisément à une phase (11, 12, 13) des phases (11, 12, 13).

2. Procédé selon la revendication 1,
**caractérisé en ce que**,
la spécification de puissance pour l'intervalle de temps de test est augmentée ou réduite.

3. Procédé selon l'une quelconque des revendications 1 à 2,
**caractérisé en ce que**,
- une charge déséquilibrée des phases (1112, 13, 14) est maintenue en dessous d'une valeur limite de charge déséquilibrée, dans la mesure où une spécification de puissance adaptée est transmise à chaque consommateur électrique (16) raccordé pour la charge.

4. Procédé selon l'une quelconque des revendications 1 à 3,
**caractérisé en ce que**,
la spécification de puissance comprend la quantité de puissance de charge supplémentaire qui peut être réellement prélevée ou la quantité de puissance de charge qui doit être réduite.

5. Procédé selon la revendication 4,
**caractérisé en ce que**,
- lorsque le courant de phase d'une phase (11, 12, 13, 14) se situe en dessous d'une valeur limite de charge et que le courant de phase de cette phase (11, 12, 13, 14) est inférieur au plus petit courant de phase mesuré d'une des autres phases (11, 12, 13, 14) en sus de la valeur limite de charge déséquilibrée, la spécification de puissance permet de signaler qu'une puissance de charge supplémentaire peut être prélevée,
- lorsque le courant de phase d'une phase (11, 12, 13, 14) se situe au-dessus d'une valeur limite de charge ou que le courant de phase de cette phase (11, 12, 13, 14) est supérieur au plus petit courant de phase mesuré d'une des autres phases (11, 12, 13, 14) en sus de la valeur limite de charge déséquilibrée, la spécification de puissance permet de signaler que la puissance de charge supplémentaire doit être réduite.

6. Procédé selon l'une quelconque des revendications 1 à 5,
**caractérisé en ce que**,
la spécification de puissance comprend une puissance de charge disponible maximale en cours.

7. Procédé selon la revendication 6,
**caractérisé en ce que**,
la puissance de charge disponible maximale en cours de la phase (11, 12, 13, 14), en tenant compte au moins des courants de phase en cours, d'une puissance maximale autorisée de la phase respective (11, 12, 13, 14) et d'une charge déséquilibrée maximale autorisée est déterminée entre les phases (11, 12, 13, 14).

8. Procédé selon la revendication 6 ou 7,
**caractérisé en ce que**,
lorsqu'un consommateur électrique (16) est raccordé pour la charge, la phase (11, 12, 13, 14) à laquelle le consommateur électrique (16) est raccordé est déterminée, et une puissance de charge disponible maximale en cours de la phase (11, 12, 13, 14) à laquelle est raccordé le consommateur électrique, est déterminée, et la puissance de charge disponible maximale en cours est transmise au consommateur électrique (16).

9. Procédé selon l'une quelconque des revendications 1 à 8,
**caractérisé en ce que**,
les spécifications de puissance sont sélectionnées de telle sorte qu'une charge individuelle des différentes phases (11, 12, 13, 14) est maintenue en sus en dessous d'une valeur limite de charge.

10. Procédé selon l'une quelconque des revendications 1 à 9,
**caractérisé en ce que**,
les courants de phase au point d'équilibre (24) sont déterminés en continu, et les spécifications de puissance pour les consommateurs électriques (16) raccordés pour la charge sont adaptées en continu et transmises au consommateur électrique respectif (16).

11. Procédé selon l'une quelconque des revendications 1 à 10,
**caractérisé en ce que**,
les consommateurs électriques (16) ajustent la puissance de charge appelée au moyen des spécifications de charge transmises.

12. Procédé selon l'une quelconque des revendications 1 à 11,
**caractérisé en ce que**,
les spécifications de puissance sont transmises par l'intermédiaire d'un signal PWM.

13. Procédé selon l'une quelconque des revendications 1 à 12,
**caractérisé en ce que**,
les consommateurs électriques (16) raccordés pour la charge sont des véhicules électriques.
